(19) Europäisches Patentamt
European Patent Office
Office européen des brevets

(11) **EP 4 462 113 B1**

(12) **EUROPEAN PATENT SPECIFICATION**

(45) Date of publication and mention
of the grant of the patent:
**24.12.2025 Bulletin 2025/52**

(21) Application number: **23172888.2**

(22) Date of filing: **11.05.2023**

(51) International Patent Classification (IPC):
**G01N 27/414** (2006.01)

(52) Cooperative Patent Classification (CPC):
**G01N 27/4143**

(54) **SUSPENDED GATE FET FOR CHEMICAL OR BIOLOGICAL APPLICATIONS**

SUSPENDED GATE FET FÜR CHEMISCHE ODER BIOLOGISCHE ANWENDUNGEN

FET À GRILLE SUSPENDUE POUR APPLICATIONS CHIMIQUES OU BIOLOGIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**13.11.2024 Bulletin 2024/46**

(73) Proprietor: **Infineon Technologies AG**
**85579 Neubiberg (DE)**

(72) Inventors:
• **KOMENKO, Vladislav**
**01097 Dresden (DE)**
• **KRAVCHENKO, Andrey**
**01069 Dresden (DE)**
• **JOSEPH, Yvonne**
**09599 Freiberg (DE)**
• **ZICKNER, Marieke**
**09599 Freiberg (DE)**
• **SELBMANN, Franz**
**09306 Erlau (DE)**

(74) Representative: **Hersina, Günter et al**
**Schoppe, Zimmermann, Stöckeler Zinkler, Schenk & Partner mbB Patentanwälte Radlkoferstrasse 2 81373 München (DE)**

(56) References cited:
**US-A- 4 730 479**

• **PARYAVI MOHSEN ET AL: "Nanoscale deflection detection of a cantilever-based biosensor using MOSFET structure: A theoretical analysis", SUPERLATTICES AND MICROSTRUCTURES, ELSEVIER, GB, vol. 98, 21 July 2016 (2016-07-21), pages 116 - 120, XP029768551, ISSN: 0749-6036, DOI: 10.1016/J.SPMI.2016.07.022**
• **KAREN M GOEDERS ET AL: "Microcantilevers: Sensing Chemical Interactions via Mechanical Motion", CHEMICAL REVIEWS, AMERICAN CHEMICAL SOCIETY, US, vol. 108, no. 2, 1 January 2008 (2008-01-01), pages 522 - 542, XP007907852, ISSN: 0009-2665, [retrieved on 20080130], DOI: 10.1021/CR0681041**
• **CHAKRABARTY PRALAY ET AL: "Performance analysis of 3D flexure FET with meandering gate for higher sensitivity", 2013 IEEE INTERNATIONAL CONFERENCE OF IEEE REGION 10 (TENCON 2013), IEEE, 1 November 2015 (2015-11-01), pages 1 - 5, XP032845184, ISSN: 2159-3442, ISBN: 978-1-4799-2825-5, [retrieved on 20160105], DOI: 10.1109/ TENCON.2015.7373072**

**Description**

Technical Field

Embodiments relate to a suspended gate field effect transistor (FET = field effect transistor) and in particular to a suspended Gate FET for chemical and/or biological applications. Thus, embodiments relate to biological sensors (biosensors) and/or chemical sensors (chemosensory applications) using a suspended gate field effect transistor.

Background

The detection of environmental parameters in the ambient atmosphere, e.g. having a gaseous or liquid phase, is becoming increasingly important for the implementation of appropriate sensors within mobile devices, but also for the application in home automation, such as smart home and, for example, in the automotive sector. However, with the ever more extensive use of sensors, there is also a particular need to be able to provide such sensors as inexpensively as possible, but nevertheless the achieved reliability and accuracy of the sensors should be as high as possible.

Thus, chemical and biological sensor technology is a key technology for the identification of gaseous and liquid substances, which will be increasingly used in the field of future technologies such as the "Internet of Things" (IoT), "Smart Everything" and Industry 4.0. In addition to the identification of various substances (e.g. fluids = gases or liquids), chemical sensors are also used in particular to measure the concentrations thereof as well as the quality or impurities thereof. This results in further applications in the field of environmental measurement, emission measurement, vehicle construction, monitoring the air quality in buildings, quality assurance, plant construction, medical applications (e.g. point-of-care diagnostics) and security technology.

An ideal chemical sensor would be characterized by the highest possible selectivity for a specific analyte, a hysteresis-free, linear characteristic curve with a steep slope (high sensitivity), a fast response, a high miniaturization or integration density, a low power consumption and a high reliability. The latter are characterized in particular by a long service life and high stability to chemical, electrical and mechanical influences. At the same time, chemical sensors should be easy to handle and cost-effective to manufacture.

Currently, a number of different sensor principles for the identification of chemical analytes, especially gases and liquids, are available on the market or the subject of research, such as spectroscopic or spectrometric arrangements, chemical sensors based on the change of the electrical resistance or the electrical conductivity, capacitive setups, chemical sensors based on passive electrical components, a combination of chemically sensitive layers with active electronic components, chemical sensors based on thermal principles, chemical sensors on the basis of gravimetric principles, chemical sensors based on changes in optical characteristics.

Despite the diversity of known chemical sensors described above, none of the sensor principles mentioned fulfils the requirements for an (at least nearly) ideal chemical sensor in a sufficient manner.

XP 029 768 551 relates to a nanoscale deflection detection of a cantilever-based biosensor using MOSFET structure, wherein a biological species can be detected based on a measurement of a cantilever deflection. Employing the cantilever as a moving gate of a MOSFET structure, its deflection can be analyzed via current characterization of the MOSFET consequently. Locating the cantilever as a suspended gate of a MOSFET on a substrate, the distance between the cantilever and an oxide layer will change the carrier concentration. Accordingly, it will be resulted in different current voltage characteristics of the device which can be measured.

XP 007 907 852 is related to microcantilevers for sensing chemical interactions via mechanical motion. Microcantilever sensors rely on their deflection to indicate sensing. The static mode of deflection occurs when an adsorbed species causes differential surface stresses on the opposing surfaces of the microcantilever. A static deflection is used to determine the amount of material absorbed onto a microcantilever. The more material that is adsorbed, the more the cantilever will deflect. Deflection results from two mechanisms, added mass and surface stress from adsorbed species.

US 4 730 479 A relates to a temperature and humidity compensation for a gas detection apparatus using multiple field effect transistors, wherein only one transistor is sensitive to the presence of a particular element, whereby similar responses to temperature and/or humidity fluctuations may be subtracted yielding a response to a particular element that is relatively insensitive to temperature and/or humidity variations.

XP 032 8451 84 relates to a performance analysis of 3D flexure FET with meandering gate for higher sensitivity. The structure of a flexure gate field effect transistor (flexure FET) is essentially a metal-oxide-semiconductor field effect transistor with a movable gate electrode that can be physically separated from the gate dielectric layer by an air gap.

Generally, there is a need in the art for an approach to implement improved sensor devices for chemical and/or biological applications having low area requirements and providing an adequate sensitivity to chemical or biological analytes in the environment.

Such a need can be solved by the suspended gate field effect transistor according to independent claim 1.

Further specific implementations of the manufacturing method are defined in the subclaims.

The described embodiments are based on the object of realizing a new sensor principle for the detection of chemical and/or biological analytes, which (as far as possible) fulfills the requirements for an ideal sensor better than the well-established principles for chemical sensors summarized above in the prior art.

According to an embodiment, a suspended gate field effect transistor (SG FET, e.g. for chemical and/or biological sensing applications) comprises a semiconductor substrate having a channel region between a first contact region and a second contact region, a membrane structure, which spans over the channel region and provides a vacuity with the opposing semiconductor substrate over the channel region, wherein the membrane structure forms a suspended (electrically conductive or electrostatically charged) gate electrode of the field effect transistor and has at least one displaceable gate region. The displaceable gate region is either electrically conductive itself or has at least one electrically conductive layer or has a non-conductive material with static charges $Q_{STAT}$. The membrane structure also has a sensitive layer, which comprises a material for interacting with a component of an analyte, wherein the sensitive layer is arranged on the membrane structure so that an interaction of the material of the sensitive layer with the component of the analyte results in a stress induced deformation of the sensitive layer and in a deflection of the displaceable gate region of the membrane structure due to the stress induced deformation of the sensitive layer. The term "membrane structure" is intended to illustrate that the (deflectable) membrane may comprise a single layer (which is electrically conductive or which is non-conductive and comprises static charges $Q_{STAT}$) or may comprise a layer sequence or layer stack having a plurality of different layers, wherein at least one of the layers is electrically conductive or wherein the plurality of different layers are non-conductive and at least one of the layers comprises static (electrostatic) charges $Q_{STAT}$.

According to embodiments, the suspended gate field effect transistor for chemical and/or biological sensing applications is miniaturizable, easily integrable, very sensitive, adaptable (customizable) and selectively executable for a large number of different analytes. At the same time, the sensor is energy-efficient to operate and cost-effective to manufacture and has a long service life.

In particular, the suspended gate field effect transistor for chemical and/or biological sensing applications may achieve a high selectivity, i.e. it does not provide (or provides only in a highly reduced extent) sensor responses for analytes outside the actual target analyte. Furthermore, the present sensor concept can provide (relatively) linear characteristic curves, characteristic curves without hysteresis, and a large measurement range. The present sensor concept does not require a defined minimum temperature for operation, which in turn avoids the necessity of integrating of heating elements and avoids an associated power consumption so that the energy efficiency of the present sensors can be significantly increased. Moreover, the present sensor concept has a low complexity in terms of equipment, i.e. the present sensor concept is based on standard CMOS technology, can be miniaturized and/or integrated and can be (generally) realized with a high service life and/or signal stability. As a result, and due to the uncomplex setup, the present sensor concept is comparatively inexpensive to manufacture and to operate.

Moreover, the suspended gate field effect transistor for chemical and/or biological sensing applications is (at least partially or completely) reversible, so that the suspended gate field effect transistor is able to recover or to return to its original background/baseline condition, after exposure to an analyte.

Brief Description of the Figures

In the following, embodiments of the present disclosure are described in more detail with respect to the figures, in which:

Fig. 1    shows a schematic view of a cross section through a suspended gate field effect transistor according to an embodiment;

Fig. 2    shows a schematic view of a cross section through a sensor arrangement having the suspended gate field effect transistor of Fig. 1 and a reference structure according to a further embodiment;

Fig. 3    shows a schematic view of a cross section through a possible implementation of a suspended gate field effect transistor according to a further embodiment;

Fig. 4    shows a schematic view of a cross section through a possible implementation of a sensor arrangement having the suspended gate field effect transistor of Fig. 3 and a reference structure according to a further embodiment;

Fig. 5    shows a schematic circuit diagram of the suspended gate field effect transistor with a constant current source for adjusting the operation point according to an embodiment; and

Fig. 6 shows a schematic illustration of a multi-analyte sensing arrangement according to an embodiment.

In the following description, embodiments are discussed in further detail using the figures, wherein in the figures and the specification identical elements and elements having the same functionality and/or the same technical or physical effect are provided with the same reference numbers or are identified with the same name. Thus, the description of these elements and of the functionality thereof as illustrated in the different embodiments are mutually exchangeable or may be applied to one another in the different embodiments.

<u>Detailed Description of the Figures</u>

In the following description, embodiments are discussed in detail, however, it should be appreciated that the embodiments provide many applicable concepts that can be embodied in a wide variety of semiconductor devices. The specific embodiments discussed are merely illustrative of specific ways to make and use the present concept, and do not limit the scope of the embodiments, as defined by the claims.

In the following description of embodiments, the same or similar elements having the same function have associated therewith the same reference signs or the same name, and a description of such elements will not be repeated for every embodiment. Moreover, features of the different embodiments described hereinafter may be combined with each other, unless specifically noted otherwise.

In the description of the embodiments, terms and text passages placed in brackets (next to a described element or function) are to be understood as further explanations, exemplary configurations, exemplary additions and/or exemplary alternatives of the described element or function.

It is understood that when an element is referred to as being "connected" or "coupled" to another element, it may be directly connected or coupled to the other element, or intermediate elements that may be present. Conversely, when an element is referred to as being "directly" connected to another element, "connected" or "coupled," there are no intermediate elements. Other terms used to describe the relationship between elements should be construed in a similar fashion (e.g., "between" versus "directly between", "adjacent" versus "directly adjacent", and "on" versus "directly on", etc.).

For facilitating the description of the different embodiments, some of the figures comprise a Cartesian coordinate system x, y, z, wherein the y-z-plane corresponds, i.e. is parallel, to a main surface region (= a reference plane = y-z-plane), wherein the direction vertically up with respect to the reference plane (y-z-plane) corresponds to the "+x" direction, and wherein the direction vertically down with respect to the reference plane (y-z-plane) corresponds to the "-x" direction. In the following description, the term "lateral" means a direction parallel to the y- and/or z-direction or a direction parallel to (or in) the y-z-plane, wherein the term "vertical" means a direction parallel to the x-direction.

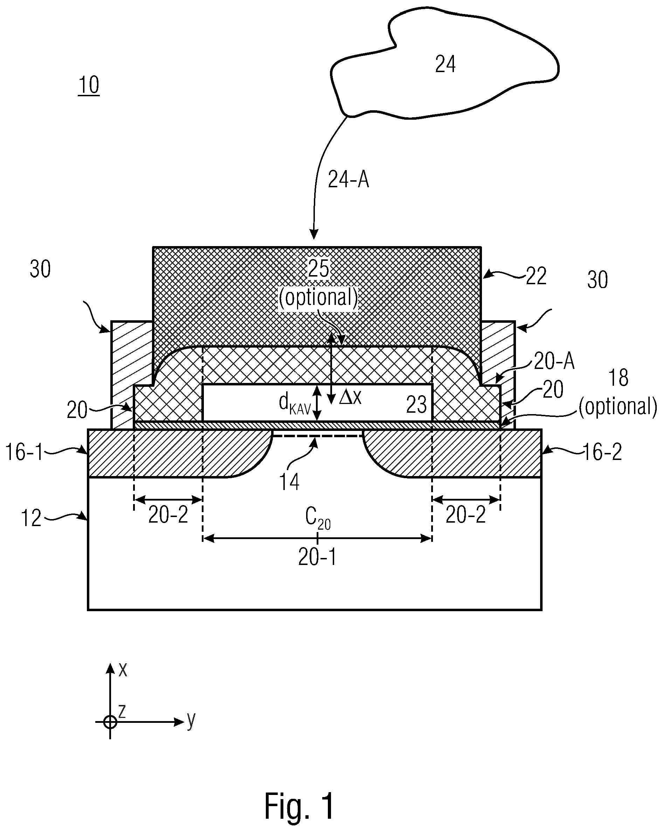

Fig. 1 shows a schematic view of a cross section through a suspended gate (SG) field effect transistor (FET) 10 according to an embodiment.

As shown in Fig. 1, the suspended gate field effect transistor (SG FET) 10 comprises a semiconductor substrate 12 having a channel region 14 between a first contact region (drain) 16-1 and a second contact region (source) 16-2. The SG FET 10 further comprises a membrane structure 20, which spans over the channel region 14 and provides a vacuity 23 with the opposing semiconductor substrate 12 over the channel region 14, wherein the membrane structure 20 forms a suspended (electrically conductive or electrostatically charged) gate electrode of the field effect transistor 10 and has a displaceable (electrically conductive or electrostatically charged) gate region 20-1. The displaceable gate region 20-1 is either electrically conductive itself or has at least one electrically conductive layer or has a non-conductive material (layer) with static charges $Q_{STAT}$.

The suspended gate FET 10 further comprises a sensitive layer 22, which comprises a material for interacting with a component 24-A of an analyte 24, wherein the sensitive layer 22 is arranged on the membrane structure 20 so that an interaction of the material of the sensitive layer 22 with the component 24-A of the analyte 24 results in a stress induced deformation of the sensitive layer 22 and in a deflection $\Delta x$ of the displaceable gate region 20-1 of the membrane structure 20 due to the stress induced deformation of the sensitive layer 22.

According to an embodiment, the suspended gate field effect transistor 10 may comprise an insulating layer 18 (gate dielectric), which is arranged on the semiconductor substrate 12 and which at least partially (= partially or completely) covers the channel region 14. The insulating layer 18 may provide a physical protection for the channel region.

As exemplarily shown in Fig. 1, the membrane structure 20 comprises the displaceable (electrically conductive or electrostatically charged) gate region 20-1. The membrane structure 20 may further comprise a stationary border region 20-2. The stationary border region 20-2 is bonded to the substrate 12, i.e. the stationary border region 20-2 anchors the membrane structure 20 at its periphery (to the substrate 12). The displaceable gate region 20-1 extends within the stationary border region 20-2 and spans (partially or completely) the channel region 14, wherein the (possible) amount of displacement $\Delta x$ of the displaceable gate region 20-1 may have its maximum $\Delta x_{MAX}$ at the geometrical center $C_{20}$ of the membrane structure 20. Thus, the region of the membrane structure 20 adjacent to the geometrical center $C_{20}$ of the

membrane structure 20 provides for the main portion of the output sensor signal.

According to an embodiment, the membrane structure 20 is arranged to span over at least a part of the channel region 14 or over the complete channel region 14. In case, the membrane structure 20 is arranged to span over a part of the channel region 14, (only) the spanned portion of the channel region 14 is influenced by the deflection of the membrane structure 20. In case, the membrane structure 20 is arranged to span over the complete channel region 14, the complete channel region 14 is influenced by the deflection of the membrane structure 20.

The suspended gate field effect transistor 10 further comprises a further isolating layer 30, which is at least laterally arranged to the membrane structure 20 for hermetically sealing the vacuity 23 for providing a sealed cavity 23 between the membrane structure 20 and the semiconductor substrate 12. According to an embodiment, the suspended gate field effect transistor 10 may further comprise contact pads on the further isolation layer 30, which are connected to the first contact region 16-1, the second contact region 16-2, and the membrane structure 20, respectively.

Providing a hermetically sealed cavity 23 between the membrane structure 20 and the semiconductor substrate 12 can significantly reduce or even completely avoid the occurrence of additional disturbances from the environment (the surrounding atmosphere). The sealed cavity 23 may suppress environmental effects, e.g. temperature, humidity, the agglomeration of particulate matter or the accumulation of disturbing fluids. Thus, non-linear effects on the sensor response and aging effects of the sensor arrangement can be reduced, for example. Moreover, as the cavity 23 below the conductive gate electrode may be vacuum-encapsulated and inaccessible to analytes, the dielectric constant (of the cavity 23 below the gate electrode) always remains unchanged.

According to an embodiment, the sensitive layer 22 may be patterned to partly coat or cover the membrane structure 20 (= suspended membrane). Further, the sensitive layer 22 may completely coat or cover the membrane structure 20. The stress $\sigma$ in the sensitive layer and/or the stress induced deformation of the membrane 20 may be optimized by means of a specific pattern and/or a specific thickness distribution of the sensitive layer 22 on the membrane structure 20.

According to an embodiment, the membrane structure 20 (which represents a gate electrode or the SG FET 10) is conductive (= is either electrically conductive itself or has at least one electrically conductive layer) or has a non-conductive material (layer) with static charges and may comprise a passivation layer 25. The passivation layer 25 can be added between the main surface region 20-A of the membrane structure 20 and the sensitive layer 22. Thus, the membrane structure 20 may be implemented as a multi-layer- or multi-material membrane structure (e.g. a multi-layer or multi-material stack). At least one of the materials/layers may have a sufficient electrical conductivity to be operated as a gate electrode or at least one of the materials/layers may have a non-conductive material with (sufficient) static charges to be operated as a gate electrode. Further, the sensitive layer 22 may comprise a plurality of layers or materials, e.g. in form of a multi-layer or multi-material structure or stack.

According to exemplary embodiments, the component (e.g. molecules or atoms) 24-A of the analyte 24 (analyte = species to be detected), which is present in the surrounding atmosphere, interacts with the sensitive layer (or a component of the sensitive layer) 22. The interaction can take place with atoms, molecules, biomolecules or part of (bio) molecules (= component). This can happen with the whole component or only parts of it. Thus, the analyte is not (necessarily) the target fluid, because it can be only a component in a fluid or even a part of a component in a fluid.

According to an embodiment, the sensitive layer 22 comprises a material for interacting with a component 24-A of an analyte 24, wherein the interaction, e.g. a physical or chemical interaction, of the sensitive layer 22 with the analyte 24 results in a tensile stress $\sigma_1$ or a compressive stress $\sigma_2$ in the sensitive layer 22. Further, the tensile stress or the compressive stress in the sensitive layer 22 results in the (vertical) deflection $\Delta x$ of the displaceable gate region 20-1 of the membrane structure 20. In other words, a relaxation (from the stress induced condition) of the deformed sensitive layer 22 having interacted with the analyte 24 results in the correspondent deflection $\Delta x$ of the displaceable gate region 20-1 of the membrane structure 20.

According to an embodiment, the material of the sensitive layer 22 may comprise at least one of the group with hydrogel, conductive nanoparticle composites, organometallic network, polymer, aptamer, antibody, and DNA/RNA. However, it should be clear that the above exemplary list of materials for the sensitive layer is not to be regarded as exhaustive.

The (vertical component $\Delta x$ of the) deflection of the displaceable gate region 20-1 of the membrane structure 20 results in a change of the distance $d_{KAV}$ between the displaceable gate region 20-1 of the membrane structure 20 and the channel region 14 and further in a correspondent change $\Delta C_G$ of a gate capacitance $C_G$ of the suspended gate field effect transistor 10. Further, the change $\Delta C_G$ of the gate capacitance $C_G$ of the suspended gate field effect transistor 10 results in a correspondent change $\Delta X_{14}$ of the channel conductivity $X_{14}$. Thus, the deflection of the membrane structure 20 forming the gate electrode of the transistor results in a change of the capacitance of the gate capacitor $C_G$, which influences or determines the channel conductivity $X_{14}$ of the transistor 10. Consequently, the channel conductivity $X_{14}$ of the transistor 10 depends on the presence and/or the concentration of the analyte 24 in the surrounding atmosphere. In other words, the presence and/or the proportion of the analyte 24 in the surrounding atmosphere can be determined based on the channel conductivity $X_{14}$ of the transistor 10.

The change of the channel conductivity and a drain current strength (intensity) can be respectively detected as an output signal in dependence on the present analyte 24 interacting with the sensitive layer 22 on the membrane structure 20. If the transistor 10 is operated as an amplifier, the change of the drain current strength is multiplied with the value of the internal resistance (resistance = 1/conductivity) of the transistor 10 and can be measured at the transistor output as the change of the drain-source voltage $\Delta V_{DS}$. Thereby, an amplification by several orders of magnitude is possible, which can significantly increase the sensitivity of the device 10.

According to an embodiment, the interaction of the component 24-A of the analyte 24 may be an adsorption or absorption of the component 24-A of the analyte 24 into the sensitive layer. The adsorption or absorption may be based on a component in the surrounding atmosphere or based on an environmental condition, such as humidity, temperature, etc. According to embodiments, an adsorption may be regarded as the adhesion of atoms, ions or molecules from a gas, liquid or dissolved solid to a surface. An absorption may be regarded as a chemical or physical phenomenon in which the molecules, atoms and ions of the substance getting absorbed enters into the bulk phase (gas, liquid or solid) of the material in which it is taken up

According to a further embodiment, the interaction of the component 24-A of the analyte 24 may be a desorption of a material embedded in the sensitive layer 22 based on a component in the surrounding atmosphere or based on an environmental condition (humidity, temperature, etc.). According to embodiments, a desorption is regarded as the physical process where a previously adsorbed substance is released from a surface. According to embodiments, the analyte 24 may be present in the surrounding atmosphere. However, the analyte 24 does not (necessarily) have to be present in the surrounding, i.e. it can be (e.g. strongly) adsorbed ("trapped") somewhere else and desorbed (e.g. by a temperature rise) later on, for example.

According to a further embodiment, the interaction of the component 24-A of the analyte 24 may be an exothermic reaction of the component 24-A of the analyte 24 with or without a catalytic material in the sensitive layer 22. According to embodiments, an exothermic reaction may be regarded as a chemical reaction that produce heat. Thus, energy is transferred to the surroundings.

According to a further embodiment, the interaction of the component 24-A of the analyte 24 may be an endothermic reaction of the component 24-A of the analyte 24 with or without a catalytic material in the sensitive layer 22. According to embodiments, an endothermic reaction may be regarded as a chemical reaction in which the reactants absorb heat energy from the surroundings. These reactions lower the temperature of their surrounding area.

In the following, a number of physical interrelationships of the suspended gate field effect transistor (SG FET) 10 are exemplarily described. To summarize, the above illustrated embodiments describe a chemical sensor 10 which is implemented as a combination of a suspended gate field effect transistor (SGFET) with a chemically sensitive layer. The cross-section shown in Fig. 1 serves to explain the operation of the sensor device 10 in form of the SG FET. In the following, it is assumed that temperature and pressure of the surrounding environment correspond to the standard conditions.

As it can be seen from Fig. 1, the chemical sensor 10 represents a device in the form of an integrated field-effect transistor according to an embodiment. The membrane structure 20 spans over the channel region 14 and provides a vacuity 23 with the opposing semiconductor substrate 12 over the channel region 14, i.e. between the membrane structure (gate electrode) 20 and the channel region of the transistor. The vacuity 23 may be open to the environmental atmosphere or may be formed as a (hermetically) sealed cavity (vacuum cavity) 23. The height of the cavity may be less than 500, 200 or 100 nm and may be at least 10 or 20 nm. Thus, the gate electrode 20 can be considered to be a self-supporting membrane. The sensitive layer 22 is formed (deposited) on the gate electrode 20. The sensitive layer 22 and the gate electrode 20 may be formed as a bi-material layer stack 20, 22.

By choosing different (i.e. a specific) coating materials for the sensitive layer 22 and their chemical functionalization, the interaction between the sensitive layer 22 and a certain analyte 24 in a gaseous or liquid phase can be defined selectively. In this process, the component 24-A, e.g. molecules, of the analyte 24 are added or incorporated in the sensitive layer 22, resulting in the formation of a mechanical compressive stress or tensile stress in the sensitive layer 22. In order to relax this stress $\sigma$, a mechanical deformation of the self-supporting membrane structure 20, i.e. the gate electrode, takes place. This results in a reduction or increase in the cavity height $d_{KAV}$ and thus in a change in the gate capacitance $C_G$.

Due to the setup, the area-related gate-channel capacitance $C_G$ consists of two components. These are the area-related capacitances of the dielectric $C_{IS}$ and the vacuum cavity $C_{KAV}$, which can be expressed using equations (1) and (2):

$$C_{IS} = \frac{\varepsilon_0 \varepsilon_{IS}}{d_{IS}} \qquad (1)$$

$$C_{KAV} = \frac{\varepsilon_0}{d_{KAV} + \Delta X(c)} \qquad (2)$$

with the dielectric constant $\varepsilon_0$, the dielectric constant of the gate dielectric $\varepsilon_{IS}$, the thickness of the dielectric $d_{IS}$ and the cavity height $d_{KAV}$. $\Delta X(c)$ refers to the change in the cavity height or the deformation of the membrane as a function of the concentration of the analyte $c$.

Since the dielectric 18 and the cavity 23 are located between the gate electrode or membrane structure 20, and the channel region 14 of the transistor 10, the total area-related gate capacitance $C_G$ can be considered to be a concentration-dependent series connection of the above capacitances. This relationship is obtained according to Equation 3.

$$C_G(c) = \frac{\varepsilon_0}{d_{KAV} + \Delta X(c) + \frac{d_{IS}}{\varepsilon_{IS}}} \tag{3}$$

The following symbols are used to further describe the operation:

$\phi_{Gate}$     *potential of the work function of the gate material,*
$\phi_{Kanal}$     *potential of the work function of the channel material,*
$Q_{IS}$     *area-related charge of the gate dielectric,*
$\varphi_B$     *Fermi potential,*
$Q_{RLZ}$     *area-related charge in the space charge zone,*
$\mu_n$     *intrinsic conduction mobility of the charge carriers in the channel region,*
$W$     *channel width,*
$L$     *channel length,*
$\lambda$     *channel length modulation parameter,*
$U_{DS}$     *drain-to-source voltage,*
$U_{GS}$     *gate-to-source voltage.*

The change in the concentration-dependent gate capacitance $C_G(c)$ influences the flat-band voltage $U_{FB}$, which can be described using equation (4).

$$U_{FB}(c) = \Phi_{Gate} + \Phi_{Kanal} - \frac{Q_{IS}}{C_G(c)} \tag{4}$$

Furthermore, the threshold voltage $U_{TH}$ changes at the same time. Equation (5) serves as a description here.

$$U_{TH}(c) = U_{FB}(c) + 2\varphi_B - \frac{Q_{RLZ}}{C_G(c)} \tag{5}$$

Finally, the drain current $I_D$ of the FET in the saturation region is influenced by the concentration-dependent gate capacitance $C_G(c)$ according to equation (6).

$$I_D(c) = \mu_n \cdot C_G(c) \cdot \frac{W}{2L}(U_{GS} - U_{TH}(c))^2(1 + \lambda U_{DS}) \tag{6}$$

The SG FET 10 here can be considered to be an amplifier, with the gate-to-source voltage $U_{GS}$ and the concentration of the analyte $c$ acting as input variables and the drain current $I_D$ being detected as the measurement signal.

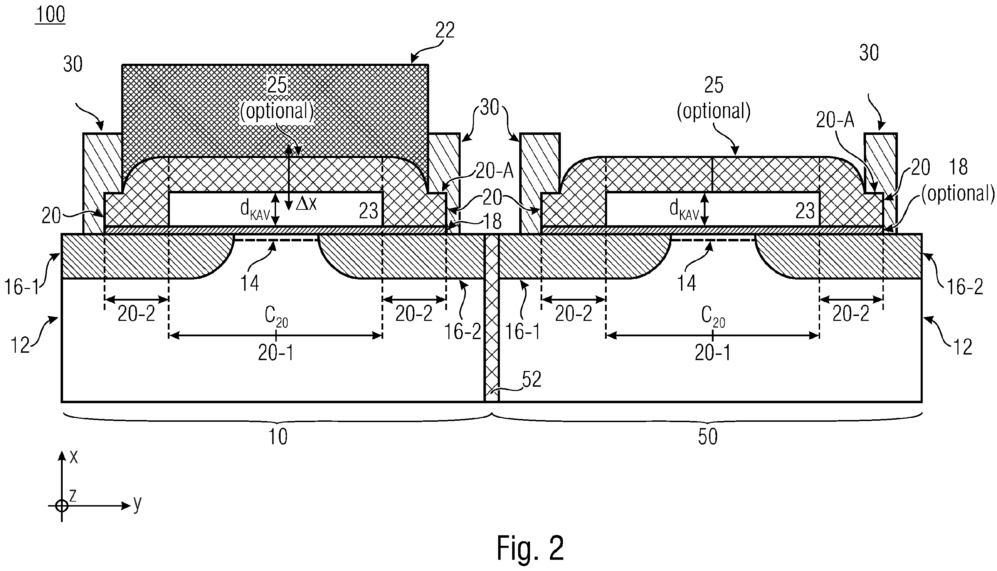

The influences of the outside temperature and the pressure can be corrected using an identical reference structure without a sensitive layer (see the embodiments of Fig. 2) or with a completely covered (or sealed) sensitive layer. According to an embodiment, the reference structure may comprise the sensitive layer that is hermetically covered by an additional layer or passivation layer. The reference structure may comprise the sensitive layer that is passivated by a chemical (de-)functionalization of top region, so that thermal and mechanical properties (of the sensor and the reference structure) are more or less the same.

An interaction converted into mechanical stress $\sigma$ is characteristic of the coating materials. The following material classes can be used as examples and are not exclusive:

- Hydrogels - crosslinked hydrophilic polymer

- precious metal nanoparticle networks with organic linker molecules (e.g. gold nanoparticle networks)
- metal organic frameworks MOFs (porous materials consisting of metal ions and organic linkers)
- Nanoparticle networks based on semiconducting particles ((doped) metal oxides or semiconductors)

- polymers

As an exemplary material for the sensitive layer 22, Kraftlignin-Hydrogel showed a strong and reproducible sensitivity to different levels of air humidity and at the same time, no reaction during toluene measurement. As an exemplary material for the sensitive layer 22, spin-coated gold nanoparticles layers showed a good response during toluene measurement resulting in a rapid increase of SG FET channel resistance. The layers produced by Nano-Spotter showed also a response during analyte measurement, but with a reduced sensitivity due to lower layer thickness.

In summary, the interaction between analyte and sensor signal is as follows:

Analyte $\rightarrow$ adsorption / absorption on / ... / in chemically sensitive layer $\rightarrow$ mechanical stress $\rightarrow$ thresholds / shrinkage $\rightarrow$ deflection of movable gate electrode $\rightarrow$ change in gate capacitance $C_G$ $\rightarrow$ change in channel conductivity $\rightarrow$ change in transistor characteristic curve

Thus, embodiments of the present disclosure are based on the finding that the combination of an integrated SG FET with a chemically sensitive layer 22 or (a plurality of) chemically sensitive layers 22 can realize a chemical sensor device with improved characteristics. The conversion of a chemical-physical interaction between the sensitive layer 22 and the analyte 24 into mechanical stress $\sigma$ is a characteristic of the chemically sensitive layer(s) 22.

To be more specific, the sensor principle is based, for example, on ad-/absorption of molecules by the sensitive layer, resulting in the formation of a mechanical stress within the layer. In order to relax the stress, a deformation of the freestanding membrane or gate-electrode takes place. This leads to a change of gate-capacity, which can be indirectly measured. The selectivity can be determined by composition/functionalization of the sensitive layer.

A feature for the production of the sensor device 10 may be the structured deposition of the sensitive layer(s) 22 onto the corresponding sensor structures (membrane structures) 20.

Due to the amplification effect of the FET 10, the sensor setup shown is characterized by high sensitivity. At the same time, the FET 10 is characterized by low power consumption, which means that the sensor with the FET 10 can be operated in an energy-efficient manner. Different coating materials and surface functionalizations allow the sensor 10 to be adapted for different analytes and the selectivity to be adjusted. Since the cavity 23 below the gate electrode may be vacuum-encapsulated and inaccessible to analytes, the dielectric constant always remains unchanged.

Reference structures (see Fig. 2 below) allow further disturbance variables to be eliminated. The presented sensor setup can be manufactured using established technologies of microelectronics or microsystem technology, which means that a cost-effective mass production can be realized.

Due to the characteristics of the sensor 10, the described essential disadvantages of existing concepts for chemical sensors are eliminated, in particular high miniaturizability and integrability can be achieved (or guaranteed).

Fig. 2 shows a schematic view of a cross section through a sensor arrangement of a chemical sensor 100 having the suspended gate field effect transistor (SG FET) 10 of Fig. 1 and a reference structure 50 according to a further embodiment.

According to an embodiment, the chemical sensor 100 may comprise the suspended gate field effect transistor (SG FET) 10 as described with respect to Fig. 1, and, additionally, a reference structure (reference sensor) 50 sensitive to an environmental parameter or for sensing an environmental parameter. The reference structure 50 has the same setup as the suspended gate field effect transistor 10 except for the sensitive layer 22. The SG FET 10 and the reference structure 50 may be electrically separated in the substrate 12 e.g. by means of an isolation structure 52, e.g. a STI structure (STI = shallow trench isolation).

According to an embodiment, the elements of the sensor device (= SG FET) 10 and the "reference" elements of the reference structure (reference sensor) 50 may have except for the sensitive layer 22 the same structural setup and (principal) functioning. In the reference structure 50, the sensitive layer 22 may be either omitted or (alternatively) coated (e.g. covered with a passivation layer for excluding an interaction with the analyte).Thus, the identical elements or the elements of both structures 10, 50 having the same functionality are identified with the same reference numbers, wherein the above evaluations of the elements of the sensor device 10 and of the functionality thereof are equally applicable to the corresponding elements of the reference sensor 50. According to an embodiment, the reference structure may comprise the sensitive layer that is hermetically covered by an additional layer or coating. The reference structure may comprise the sensitive layer that is passivated by a chemical (de-)functionalization of the top region thereof, so that thermal and mechanical properties (of the sensor and the reference structure) are as similar as possible.

As the reference sensor 50 does not have the sensitive layer 22, the reference sensor 50 is not sensitive to the presence or concentration of the component 24-A of the analyte 24 to be detected by the sensor device (SG FET) 10.

In the following, the technical effect of commonly using the sensor arrangement and the reference sensor arrangement are described.

The reference measurement of the reference sensor 50 may be used in order to determine an information about unsuppressed environmental effects, e.g. temperature, atmospheric pressure of the environment, etc. This information may be used to correct other sensor measurements of the sensor device 10 that are impacted by the environment in the same, or approximately same, manner as the reference measurement of the reference sensor 50. Consequently, a reference measurement with the reference sensor 50, using a similar setup to the sensor device 10 may be used to correct or adapt the measurement results of the sensor device 10.

Moreover, not only environmental influences may be determined or compensated in that way. With the reference measurement and, for example, with an evaluation of a measurement trend over time, sensor parameters or a sensor condition, for example aging of the sensor device 10 and/or fluctuations of the supply voltage, may be determined or taken into account for a compensation or improvement of other measurements of the sensor device 10.

The sensor device (chemical sensor) 100 may also comprise a plurality of suspended gate field effect transistors (SG FET) 10 as described in connection with Fig. 1. In the multi-analyte sensing arrangement 200, a first group 10-A of the SG FETs 10 comprises a first sensitive layer 22, which is sensitive to first component 24-A of the analyte 24, wherein a second group 10-B of the SG FETs 10 comprises a second sensitive layer 22, which is sensitive to a second component of the (same) analyte 24.

According to an embodiment, it is for example possible to use several immobilized antibodies with different epitopes (polyclonal antibodies) for the same analyte (e.g. antigen).

As the first and second sensitive layers 22are sensitive to different components of the "same" analyte 24, the accuracy and reliability of the determination of the presence and/or concentration of the analyte 24 can be further enhanced.

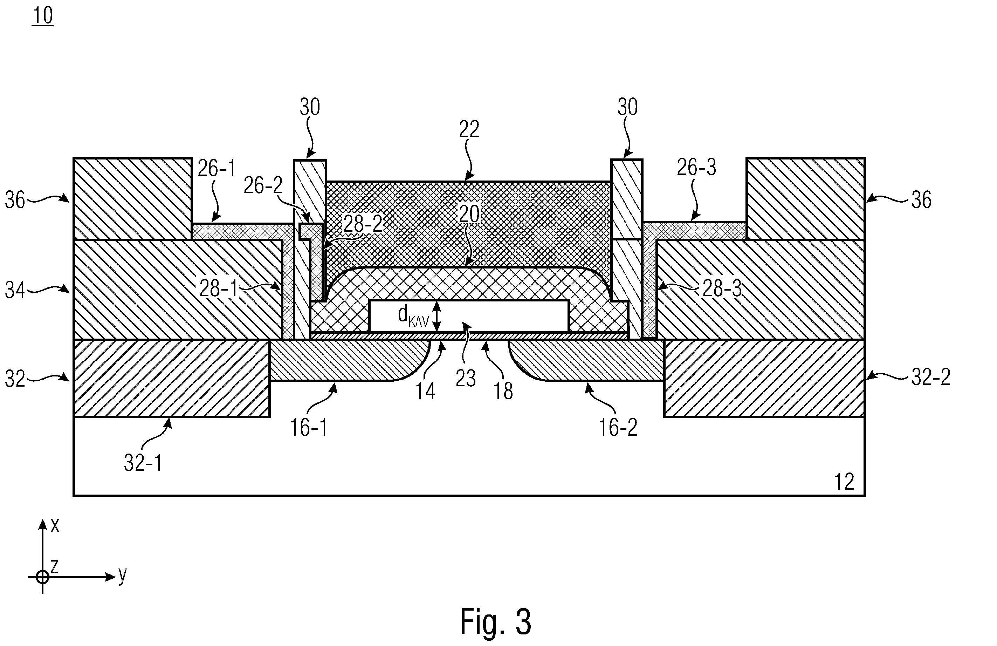

Fig. 3 shows a schematic view of a cross section through a possible implementation of a suspended gate field effect transistor (SG FET) 10 according to a further embodiment.

As shown in Fig. 3, the sensor device (SG FET) 10 comprises the channel region 14 between the first contact region (drain) 16-1 and the second contact region (source) 16-2 in the semiconductor substrate 12. The semiconductor substrate 12, e.g. a monocrystalline silicon substrate, has, for example, a STI structure 32 (STI = shallow trench isolation, e.g. trenches filled with silicon oxide) for defining the transistor area in the semiconductor substrate 12. The STI structure may comprise trenches 32-1, 32-2 in the semiconductor substrate 12, which are filled with an isolation material, e.g., an silicon oxide.

The channel region 14 comprises a first doping type with a first doping concentration. The first and second contact areas 16-1, 16-2 comprise a second doping type (complimentary to the first doping type) with a second doping concentration, which is higher than the first doping concentration.

A first isolation layer 18, which may form a control electrode dielectric or gate dielectric, is arranged on the semiconductor substrate 12 and completely covers the channel region 14 and may partly cover the first and second contact regions 16-1, 16-2. The membrane electrode (membrane structure) 20 is arranged on the control electrode dielectric 18 and provides a cavity 23, e.g. a sealed cavity, between the semiconductor substrate 12 (e.g. between the control electrode dielectric 18 on the semiconductor substrate 12) and the opposing membrane structure 20. Thus, the membrane structure 20 forms a self-supporting membrane (gate). A second isolation layer 30 (or 34) is at least laterally arranged to the membrane structure 20 for hermetically sealing the cavity 23 between the membrane structure 20 and the semiconductor substrate 12.

Contact pads (contact areas) 26-1, 26-2, 26-3 are connected over vias 28-1, 28-2, 28-3 with the first contact region 16-1, the second contact region 16-2, and the membrane structure (gate electrode) 20, respectively of the SG FET 10. Thus, the contact pads 26-1, 26-2, 26-3 and the vias 28-1, 28-2, 28-3 form metallic leads to the electrodes 16-1 (drain), 16-2 (source) and 20 (gate). Furthermore, a final passivation layer or passivation layer stack 34, 36, e.g. silicon oxide layer(s), is arranged on the SG FET 10 comprising openings for the contact pads 26-1, 26-2, 26-3.

By arranging the sensitive layer 22 on the (electrically conductive or electrostatically charged) membrane structure 20, a center portion (displaceable gate region) 20-1 of the membrane structure 20 is deflectable in a vertical direction and may respond to a stress induced deformation of the sensitive layer 22, wherein the stress induced deformation is based on an interaction of the material of the sensitive layer 22 with the component of the analyte 24.

Based on the stress induced deformation of the sensitive layer 22, the membrane structure 20 is deformed and vertically displaced by $\Delta x$, wherein such as deformation changes the distance $d_{KAV}$ by the displacement $\Delta x$ ($d_{KAV} \pm \Delta x$) between the electrodes 14, 20. This results in a change $\Delta C_G$ of the gate capacitance $C_G$ and in a correspondent change of the channel conductivity $X_{14}$ of the SG FET 10, that influences an electric output signal, which can be read out at the contact pads 26-1, 26-2, 26-3.

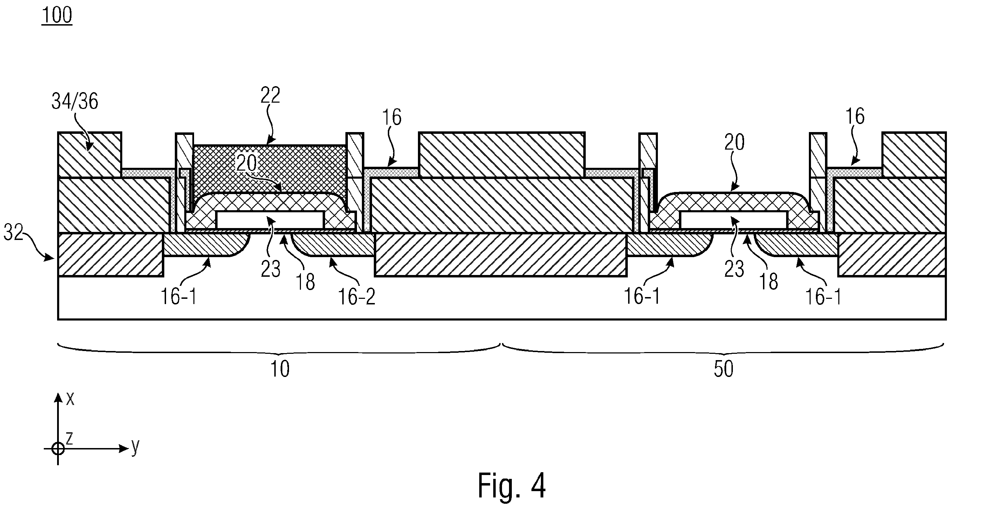

Fig. 4 shows a schematic view of a cross section through an implementation of a sensor arrangement 100 having the suspended gate field effect transistor (SG FET) 10 of Fig. 3 together with a reference structure 50 according to a further embodiment.

According to an embodiment, the chemical sensor 100 may comprise the suspended gate field effect transistor 10 as described with respect to Fig. 3, and, additionally, a reference structure 50 sensitive to an environmental parameter or for sensing an environmental parameter. The reference structure 50 has the same setup as the suspended gate field effect transistor 10 except for the sensitive layer 22. In the reference structure 50, the sensitive layer 22 may be either omitted or (alternatively) coated (e.g. covered with a passivation layer for excluding an interaction with the analyte).

According to an embodiment, the elements of the sensor device (= SG FET) 10 and the "reference" elements of the reference structure (reference sensor) 50 may have except for the sensitive layer 22 the same structural setup and (principal) functioning. Thus, the identical elements or the elements of both structures 10, 50 having the same functionality are identified with the same reference numbers, wherein the above evaluations of Figs. 1 to 3 of the elements of the sensor device 10 and of the functionality thereof are equally applicable to the corresponding elements of the reference sensor 50.

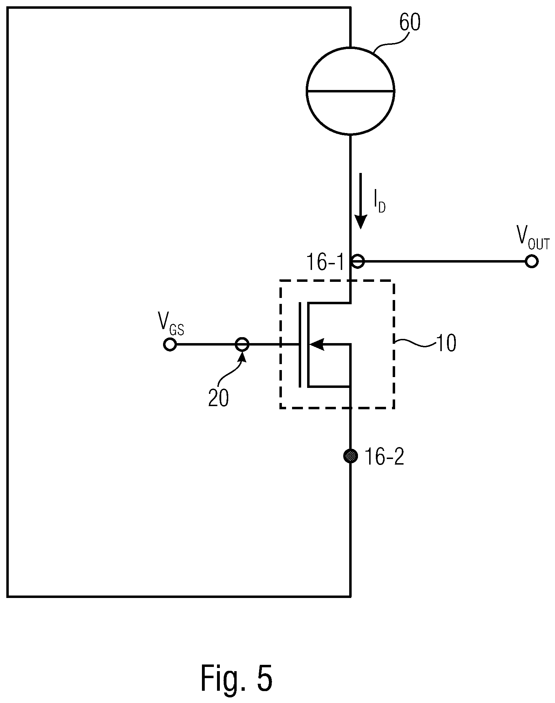

Fig. 5 shows a schematic circuit diagram of the suspended gate field effect transistor 10 with a constant current source 60 for adjusting the operation point according to an embodiment.

To be more specific, Fig. 5 shows the connection of the transistor 10 to a constant current source 60 allowing the determination of an operating point. In this implementation, a constant voltage $V_{GS}$ can be applied to the gate electrode 20 and a drain current intensity $I_D$ can be adjusted. During the change in the gate capacitance $C_G$ due to a deflection of the membrane structure 20 in a vertical direction in response to a stress induced deformation of the sensitive layer 22, the channel conductivity $X_{14}$ (1/channel resistance $R_{14}$) is increased or reduced, respectively, whereby the voltage has to be adapted by the current source 60 in order to keep the value of the current $I_D$ constant. The voltage drop $V_{OUT}$ (= $V_{DS}$) across the channel resistance $R_{22}$ is detected as an output signal $V_{OUT}$. Voltage drop $V_{OUT}$ depends on the presence and/or the concentration of the analyte 24 in the surrounding atmosphere.

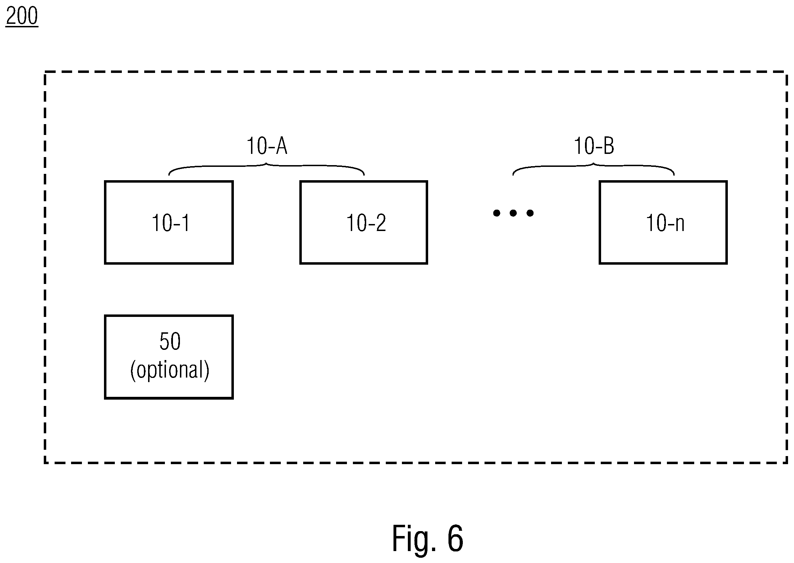

Fig. 6 shows a schematic illustration of a (multi-analyte) sensing arrangement 200 according to an embodiment.

The (multi-analyte) sensing arrangement 200 comprises a plurality (n) of suspended gate field effect transistors (SG FET) 10 (10-1, 10-2, ... 10-n) as described in connection with Figs. 1 to 5. In the multi-analyte sensing arrangement 200, a first group 10-A of the SG FETs 10 comprises a sensitive layer 22, which is only sensitive to component of a first analyte 24-1, wherein a second group 10-B of the SG FETs 10 comprises a sensitive layer 22, which is sensitive to a component of a first analyte and/or second analyte.

In case, the first group 10-A of the SG FETs 10 with the sensitive layer 22 and the second group 10-B of the SG FETs 10 with the sensitive layer 22 are sensitive to the same analyte 24, an improved and more reliable detection of one analyte can be achieved.

In case, the first group 10-A of the SG FETs 10 with the sensitive layer 22 and the second group 10-B of the SG FETs 10 with the sensitive layer 22 are sensitive to the different analytes 24, a multi-analyte detection can be achieved.

As the first and second sensitive layers 22 are sensitive to different components of different analytes 24-1, 24-2, the presence and/or concentration of the different analytes 24 can be sensed.

According to an embodiment, the multi-analyte sensing arrangement 200 may further comprise a reference structure 50, e.g. for sensing environmental parameters, wherein the reference structure 50 has the same setup as the plurality of suspended gate field effect transistors except for the sensitive layers 22. According to an embodiment of the reference structure 50, the sensitive layer 22 may be either omitted or (alternatively) coated (e.g. covered with a passivation layer for excluding an interaction with the analyte). Thus, the identical elements or the elements of both structures 10, 50 having the same functionality are identified with the same reference numbers, wherein the above evaluations of Figs. 1 to 4 of the elements of the sensor device 10 and of the functionality thereof are equally applicable to the corresponding elements of the reference sensor 50.

According to an embodiment, the plurality of suspended gate field effect transistors may be parallel connected and/or may be arranged in an nxm-sensor array, with n ≥ 2 and m ≥ 2.

The SG FET 10, the chemical sensor 100 and the multi-analyte sensing arrangement 200 as described above can be used for identifying chemical analytes in a wide variety of applications. These application fields exemplarily include, but are not limited to:

- emission measurements / monitoring pollution
- monitoring air quality in buildings
- monitoring water and wastewater
- quality control of chemicals and resources in industrial, pharmaceutical and medical applications
- detecting residues and impurities (quality assurance)
- monitoring gases
- electronic nose / tongue
- security applications e.g. detection of explosives
- breathing gas analysis
- analysis of body fluids
- mobile sensor application
- environmental monitoring
- automotive sensor applications

- Internet of Things / Industry 4.0 / Smart Everything

Additional embodiments and aspects are described which may be used alone or in combination with the features and functionalities described herein.

According to an embodiment, a suspended gate field effect transistor comprises a semiconductor substrate having a channel region between a first contact region and a second contact region, a membrane structure, which spans over the channel region and provides a vacuity with the opposing semiconductor substrate over the channel region, wherein the membrane structure forms a suspended gate electrode of the field effect transistor and has at least one displaceable gate region, and a sensitive layer, which comprises a material for interacting with a component of an analyte, wherein the sensitive layer is arranged on the membrane structure so that an interaction of the material of the sensitive layer with the component of the analyte results in a stress induced deformation of the sensitive layer and in a deflection ($\Delta x$) of the displaceable gate region of the membrane structure due to the stress induced deformation of the sensitive layer.

According to an embodiment, the interaction of the sensitive layer with the analyte results in a tensile stress or a compressive stress in the sensitive layer resulting in the deflection of the displaceable (electrically conductive or electrostatically charged) gate region of the membrane structure.

According to an embodiment, the deflection of the displaceable gate region of the membrane structure results in a change of the distance between the displaceable gate region of the membrane structure and the channel region and further in a correspondent change of a gate capacitance of the suspended gate field effect transistor.

According to an embodiment, the change of the gate capacitance of the suspended gate field effect transistor results in a correspondent change of the channel conductivity.

According to an embodiment, a relaxation of the deformed sensitive layer having interacted with the analyte results in the correspondent deflection of the displaceable gate region of the membrane structure.

According to an embodiment, wherein the interaction of the component of the analyte is an adsorption or absorption of the component of the analyte into the sensitive layer based on a component in the surrounding atmosphere or based on an environmental condition.

According to an embodiment, the interaction of the component of the analyte is a desorption of a material embedded in the sensitive layer based on a component in the surrounding atmosphere or based on an environmental condition.

According to an embodiment, the interaction of the component of the analyte is an exothermic reaction of the component of the analyte with or without a catalytic material in the sensitive layer.

According to an embodiment, the interaction of the component of the analyte is an endothermic reaction of the component of the analyte with or without a catalytic material in the sensitive layer.

According to an embodiment, the material of the sensitive layer comprises at least one of a hydrogel, conductive nanoparticle composites, organometallic network, polymer, aptamer, antibody, and DNA/RNA.

According to an embodiment, the membrane structure is arranged to span over at least a part of the channel region or over the complete channel region.

The suspended gate field effect transistor further comprises a further isolating layer which is at least laterally arranged to the membrane structure for hermetically sealing the vacuity for providing a sealed cavity between the membrane structure and the semiconductor substrate, and contact pads on the further isolation layer, which are connected to the first contact region, the second contact region, and the membrane structure, respectively.

According to an embodiment, the material of the sensitive layer is configured to chemically or physically interact with the component of the analyte.

According to an embodiment, the suspended gate field effect transistor further comprises an insulating layer, which is arranged on the semiconductor substrate and which covers the channel region.

According to an embodiment, a chemical sensor comprises the suspended gate field effect transistor, and a reference structure for sensing an environmental parameter, wherein the reference structure has the same setup as the suspended gate field effect transistor except for the sensitive layer. The sensitive layer may be either omitted or (alternatively) coated. According to an embodiment, a multi-analyte sensing arrangement comprises a plurality of suspended gate field effect transistors, wherein a first group of the field effect transistors comprising a sensitive layer, which is sensitive to a first analyte, and wherein a second group of the field effect transistors comprising a sensitive layer, which is sensitive to a second analyte.

According to an embodiment, the multi-analyte sensing arrangement further comprises a reference structure for a sensing environmental parameter, wherein the reference structure has the same setup as the plurality of suspended gate field effect transistors except for the sensitive layer.

According to an embodiment, the plurality of suspended gate field effect transistors are arranged in an nxm-sensor array, with $n \geq 2$ and $m \geq 2$.

Although some aspects have been described as features in the context of an apparatus, it is clear that such a description may also be regarded as a description of corresponding features of a method. Although some aspects have been described as features in the context of a method, it is clear that such a description may also be regarded as a description of corresponding features concerning the functionality of an apparatus.

In the foregoing detailed description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the detailed description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments, as defined by the claims. This application is intended to cover any adaptations or variations of the specific embodiments discussed herein. Therefore, it is intended that the embodiments be limited only by the claims.

**Claims**

1. Suspended gate field effect transistor (10), comprising:

   a semiconductor substrate (12) having a channel region (14) between a first contact region (16-1) and a second contact region (16-2),
   a membrane structure (20), which spans over the channel region (14) and provides a vacuity (23) with the opposing semiconductor substrate (12) over the channel region (14), wherein the membrane structure (20) forms a suspended gate electrode of the field effect transistor and has at least one displaceable gate region (20-1),
   an isolating layer (30; 34), which is at least laterally arranged to the membrane structure (20) for hermetically sealing the vacuity (23) for providing a hermetically sealed cavity between the membrane structure (20) and the semiconductor substrate (12), and
   a sensitive layer (22), which comprises a material for interacting with a component (24-A) of an analyte (24), wherein the sensitive layer (22) is arranged on the membrane structure (20) so that an interaction of the material of the sensitive layer (22) with the component (24-A) of the analyte (24) results in a stress induced deformation of the sensitive layer (22) and in a deflection ($\Delta x$) of the displaceable gate region (20-1) of the membrane structure (20) due to the stress induced deformation of the sensitive layer (22).

2. The suspended gate field effect transistor (10) of claim 1, wherein the interaction of the sensitive layer (22) with the analyte (24) results in a tensile stress or a compressive stress in the sensitive layer (22) resulting in the deflection of the displaceable gate region (20-1) of the membrane structure (20).

3. The suspended gate field effect transistor (10) of claim 1 or 2, wherein the deflection of the displaceable gate region (20-1) of the membrane structure (20) results in a change of the distance ($d_{KAV}$) between the displaceable gate region (20-1) of the membrane structure (20) and the channel region (14) and further in a correspondent change of a gate capacitance ($C_G$) of the suspended gate field effect transistor (10).

4. The suspended gate field effect transistor (10) of claim 3, wherein the change of the gate capacitance of the suspended gate field effect transistor results in a correspondent change of the channel conductivity.

5. The suspended gate field effect transistor (10) of any of the preceding claims, wherein a relaxation of the deformed sensitive layer (22) having interacted with the analyte (24-A) results in the correspondent deflection of the displaceable gate region (20-1) of the membrane structure (20).

6. The suspended gate field effect transistor (10) of any of the preceding claims, wherein the interaction of the component (24-A) of the analyte (24) is an adsorption or absorption of the component (24-A) of the analyte (24) into the sensitive layer (22) based on a component in the surrounding atmosphere or based on an environmental condition.

7. The suspended gate field effect transistor (10) of any of claims 1 to 5, wherein the interaction of the component (24-A) of the analyte (24) is a desorption of a material embedded in the sensitive layer (22) based on a component in the surrounding atmosphere or based on an environmental condition.

8. The suspended gate field effect transistor (10) of any of claims 1 to 5, wherein the interaction of the component (24-A) of the analyte (24) is an exothermic reaction of the component (24-A) of the analyte (24) with or without a catalytic material in the sensitive layer (22).

9. The suspended gate field effect transistor (10) of any of claims 1 to 5, wherein the interaction of the component (24-A) of the analyte (24) is an endothermic reaction of the component (24-A) of the analyte (24) with or without a catalytic material in the sensitive layer (22).

10. The suspended gate field effect transistor (10) of any of the preceding claims, wherein the material of the sensitive layer (22) comprises at least one of a hydrogel, conductive nanoparticle composites, organometallic network, polymer, aptamer, antibody, and DNA/RNA.

11. The suspended gate field effect transistor (10) of any of the preceding claims, wherein the membrane structure (20) is arranged to span over at least a part of the channel region (14) or over the complete channel region (14).

12. The suspended gate field effect transistor (10) of any of the preceding claims, further comprising:
contact pads (26-1, 26-2, 26-3) on the further isolation layer (30; 34), which are connected to the first contact region (16-1), the second contact region (16-2), and the membrane structure (20), respectively.

13. The suspended gate field effect transistor (10) of any of the preceding claims, wherein the material of the sensitive layer (22) is configured to chemically or physically interact with the component (24-A) of the analyte (24).

14. The suspended gate field effect transistor (10) of any of the preceding claims, further comprising:
an insulating layer (18), which is arranged on the semiconductor substrate (12) and which covers the channel region (14),

15. The suspended gate field effect transistor (10) of any of the preceding claims, wherein the displaceable gate region (20-1) of the membrane structure (20) is electrically conductive itself or has at least one electrically conductive layer or has a non-conductive material with static charges.

16. A chemical sensor (100), comprising:

a suspended gate field effect transistor (10) according to any of the preceding claims, and
a reference structure (50) for sensing an environmental parameter, wherein the reference structure has the same setup as the suspended gate field effect transistor except for the sensitive layer (22).

17. A sensing arrangement comprising:

a plurality of suspended gate field effect transistors (10; 10-1, 10-2 ... 10-n) according to the any of claims 1 to 15, wherein a first group (10-A) of the field effect transistors (10) comprises a sensitive layer (22), which is sensitive to a first analyte (24), and
wherein second group (10-B) of the field effect transistors (10) comprises a sensitive layer (22), which is sensitive to the first analyte (24) or to a second analyte (24).

18. The sensing arrangement of claim 17, further comprising:
a reference structure (50) for a sensing environmental parameter, wherein the reference structure has the same setup as the plurality of suspended gate field effect transistors (10) except for the sensitive layer (22).

19. The sensing arrangement of claim 17 or 18, wherein the plurality of suspended gate field effect transistors (10) are arranged in an nxm-sensor array, with $n \geq 2$ and $m \geq 2$.

**Patentansprüche**

1. Suspended-Gate-Feldeffekttransistor (10), der folgende Merkmale aufweist:

   ein Halbleitersubstrat (12) mit einer Kanalregion (14) zwischen einer ersten Kontaktregion (16-1) und einer zweiten Kontaktregion (16-2),
   eine Membranstruktur (20), die die Kanalregion (14) überspannt und einen Freiraum (23) mit dem gegenüberliegenden Halbleitersubstrat (12) über der Kanalregion (14) bereitstellt, wobei die Membranstruktur (20) eine Suspended-Gate-Elektrode des Feldeffekttransistors bildet und zumindest eine verschiebbare Gate-Region (20-1) aufweist,
   eine Isolationsschicht (30; 34), die zumindest lateral zu der Membranstruktur (20) angeordnet ist, um den Freiraum (23) hermetisch abzudichten, um einen hermetisch abgedichteten Hohlraum zwischen der Membranstruktur (20) und dem Halbleitersubstrat (12) bereitzustellen, und
   eine sensitive Schicht (22), die ein Material zur Wechselwirkung mit einer Komponente (24-A) eines Analyten (24) aufweist, wobei die sensitive Schicht (22) auf der Membranstruktur (20) so angeordnet ist, dass eine Wechselwirkung des Materials der sensitiven Schicht (22) mit der Komponente (24-A) des Analyten (24) zu einer spannungsinduzierten Verformung der sensitiven Schicht (22) und zu einer Auslenkung ($\Delta$x) der verschiebbaren Gate-Region (20-1) der Membranstruktur (20) aufgrund der spannungsinduzierten Verformung der sensitiven Schicht (22) führt.

2. Der Suspended-Gate-Feldeffekttransistor (10) nach Anspruch 1, wobei die Wechselwirkung der sensitiven Schicht (22) mit dem Analyten (24) zu einer Zugspannung oder einer Druckspannung in der sensitiven Schicht (22) führt, die zu der Auslenkung der verschiebbaren Gate-Region (20-1) der Membranstruktur (20) führt.

3. Der Suspended-Gate-Feldeffekttransistor (10) nach Anspruch 1 oder 2, wobei die Auslenkung der verschiebbaren Gate-Region (20-1) der Membranstruktur (20) zu einer Änderung des Abstands ($d_{KAV}$) zwischen der verschiebbaren Gate-Region (20-1) der Membranstruktur (20) und der Kanalregion (14) und ferner zu einer entsprechenden Änderung einer Gate-Kapazität ($C_G$) des Suspended-Gate-Feldeffekttransistors (10) führt.

4. Der Suspended-Gate-Feldeffekttransistor (10) nach Anspruch 3, wobei die Änderung der Gate-Kapazität des Suspended-Gate-Feldeffekttransistors zu einer entsprechenden Änderung der Kanalleitfähigkeit führt.

5. Der Suspended-Gate-Feldeffekttransistor (10) nach einem der vorhergehenden Ansprüche, wobei eine Entspannung der deformierten sensitiven Schicht (22), die mit dem Analyten (24-A) in Wechselwirkung getreten ist, zu der entsprechenden Auslenkung der verschiebbaren Gate-Region (20-1) der Membranstruktur (20) führt.

6. Der Suspended-Gate-Feldeffekttransistor (10) nach einem der vorhergehenden Ansprüche, wobei die Wechselwirkung der Komponente (24-A) des Analyten (24) eine Adsorption oder Absorption der Komponente (24-A) des Analyten (24) in die sensitive Schicht (22) basierend auf einer Komponente in der umgebenden Atmosphäre oder basierend auf einer Umgebungsbedingung ist.

7. Der Suspended-Gate-Feldeffekttransistor (10) nach einem der Ansprüche 1 bis 5, wobei die Wechselwirkung der Komponente (24-A) des Analyten (24) eine Desorption eines in die sensitive Schicht (22) eingebetteten Materials basierend auf einer Komponente in der umgebenden Atmosphäre oder basierend auf einer Umgebungsbedingung ist.

8. Der Suspended-Gate-Feldeffekttransistor (10) nach einem der Ansprüche 1 bis 5, wobei die Wechselwirkung der Komponente (24-A) des Analyten (24) eine exotherme Reaktion der Komponente (24-A) des Analyten (24) mit oder ohne ein katalytisches Material in der sensitiven Schicht (22) ist.

9. Der Suspended-Gate-Feldeffekttransistor (10) nach einem der Ansprüche 1 bis 5, wobei die Wechselwirkung der Komponente (24-A) des Analyten (24) eine endotherme Reaktion der Komponente (24-A) des Analyten (24) mit oder ohne ein katalytisches Material in der sensitiven Schicht (22) ist.

10. Der Suspended-Gate-Feldeffekttransistor (10) nach einem der vorhergehenden Ansprüche, wobei das Material der sensitiven Schicht (22) mindestens eines von einem Hydrogel, leitfähigen Nanopartikelverbundstoffen, organometallischem Netzwerk, Polymer, Aptamer, Antikörper und DNA/RNA aufweist.

**11.** Der Suspended-Gate-Feldeffekttransistor (10) nach einem der vorhergehenden Ansprüche, wobei die Membranstruktur (20) so angeordnet ist, dass dieselbe zumindest einen Teil der Kanalregion (14) oder die gesamte Kanalregion (14) überspannt.

**12.** Der Suspended-Gate-Feldeffekttransistor (10) nach einem der vorhergehenden Ansprüche, der ferner folgende Merkmale aufweist:
Kontaktanschlussflächen (26-1, 26-2, 26-3) auf der weiteren Isolationsschicht (30; 34), die mit der ersten Kontaktregion (16-1), der zweiten Kontaktregion (16-2) beziehungsweise der Membranstruktur (20) verbunden sind.

**13.** Der Suspended-Gate-Feldeffekttransistor (10) nach einem der vorhergehenden Ansprüche, wobei das Material der sensitiven Schicht (22) so konfiguriert ist, dass dasselbe chemisch oder physikalisch mit der Komponente (24-A) des Analyten (24) in Wechselwirkung tritt.

**14.** Der Suspended-Gate-Feldeffekttransistor (10) nach einem der vorhergehenden Ansprüche, der ferner folgende Merkmale aufweist:
eine Isolierschicht (18), die auf dem Halbleitersubstrat (12) angeordnet ist und die die Kanalregion (14) bedeckt,

**15.** Der Suspended-Gate-Feldeffekttransistor (10) nach einem der vorhergehenden Ansprüche, wobei die verschiebbare Gate-Region (20-1) der Membranstruktur (20) selbst elektrisch leitfähig ist oder zumindest eine elektrisch leitfähige Schicht aufweist oder ein nicht leitfähiges Material mit statischen Ladungen aufweist.

**16.** Ein chemischer Sensor (100), der folgende Merkmale aufweist:

einen Suspended-Gate-Feldeffekttransistor (10) nach einem der vorhergehenden Ansprüche, und
eine Referenzstruktur (50) zum Erfassen eines Umgebungsparameters, wobei die Referenzstruktur den gleichen Aufbau wie der Suspended-Gate-Feldeffekttransistor mit Ausnahme der empfindlichen Schicht (22) aufweist.

**17.** Eine Erfassungsanordnung, die folgende Merkmale aufweist:

eine Mehrzahl von Suspended-Gate-Feldeffekttransistoren (10; 10-1, 10-2 ... 10-n) nach einem der Ansprüche 1 bis 15,
wobei eine erste Gruppe (10-A) der Feldeffekttransistoren (10) eine empfindliche Schicht (22) aufweist, die für einen ersten Analyten (24) empfindlich ist, und
wobei eine zweite Gruppe (10-B) der Feldeffekttransistoren (10) eine empfindliche Schicht (22) aufweist, die für den ersten Analyten (24) oder für einen zweiten Analyten (24) empfindlich ist.

**18.** Die Erfassungsanordnung nach Anspruch 17, die ferner folgende Merkmale aufweist:
eine Referenzstruktur (50) zum Erfassen eines Umgebungsparameters, wobei die Referenzstruktur den gleichen Aufbau wie die Mehrzahl von Suspended-Gate-Feldeffekttransistoren (10) mit Ausnahme der empfindlichen Schicht (22) aufweist.

**19.** Die Erfassungsanordnung nach Anspruch 17 oder 18, wobei die Mehrzahl von Suspended-Gate-Feldeffekttransistoren (10) in einem nxm-Sensor-Array angeordnet sind, wobei n $\geq$ 2 und m $\geq$ 2.

**Revendications**

**1.** Transistor (10) à effet de champ à grille suspendue, comprenant :

un substrat (12) à semiconducteur ayant une région (14) de canal entre une première région (16-1) de contact et une deuxième région (16-2) de contact,
une structure (20) de membrane, qui chevauche la région (14) de canal et donne un vide (23) avec le substrat (12) à semiconducteur opposé sur la région (14) de canal, dans lequel la structure (20) de membrane forme une électrode de grille suspendue du transistor à effet de champ et a moins une région (20-1) de grille déplaçable, une couche (30 ; 34) isolante, qui est disposée au moins latéralement à la structure (20) de membrane pour sceller hermétiquement le vide (23), afin de donner une cavité scellée hermétiquement entre la structure (20) de membrane et le substrat (12) à semiconducteur, et

une couche (22) sensible, qui comprend un matériau pour interagir avec un constituant (24-A) d'un analyte (24), dans lequel la couche (22) sensible est disposée sur la structure (20) de membrane de manière à ce qu'une interaction du matériau de la couche (22) sensible avec le constituant (24-A) de l'analyte (24) se traduise par une déformation induite par contrainte de la couche (22) sensible et par une déviation ($\Delta$X) de la région (20-1) de grille déplaçable de la structure (20) de membrane due à la déformation induite par contrainte de la couche (22) sensible.

2. Le transistor (10) à effet de champ à grille suspendue de la revendication 1, dans lequel l'interaction de la couche (22) sensible avec l'analyte (24) donne une contrainte de traction ou une contrainte de compression dans la couche (22) sensible, qui se traduit par la déviation de la région (20-1) de grille déplaçable de la structure (20) de membrane.

3. Le transistor (10) à effet de champ à grille suspendue de la revendication 1 ou 2, dans lequel la déviation de la région (20-1) de grille déplaçable de la structure (20) de membrane donne un changement de la distance ($d_{KAV}$) entre la région (20-1) de grille déplaçable de la structure (20) de membrane et la région (14) de canal et en outre un changement correspondant d'une capacité ($C_G$) de grille du transistor (10) à effet de champ à grille suspendue.

4. Le transistor (10) à effet de champ à grille suspendue de la revendication 3, dans lequel le changement de la capacité de grille du transistor à effet de champ à grille suspendue se traduit par un changement correspondant de la conductivité du canal.

5. Le transistor (10) à effet de champ à grille suspendue de l'une quelconque des revendications précédentes, dans lequel une relaxation de la couche (22) sensible déformée ayant interagi avec l'analyte (24-A) se traduit par la déviation correspondante de la région (20-1) de grille déplaçable de la structure (20) de membrane.

6. Le transistor (10) à effet de champ à grille suspendue de l'une quelconque des revendications précédentes, dans lequel l'interaction du constituant (24-A) de l'analyte (24) est une adsorption ou une absorption du constituant (24-A) de l'analyte (24) dans la couche (22) sensible sur la base d'un composant dans l'atmosphère environnante ou sur la base d'un état environnemental.

7. Le transistor (10) à effet de champ à grille suspendue de l'une quelconque des revendications 1 à 5, dans lequel l'interaction du constituant (24-A) de l'analyte (24) est une désorption d'un matériau incorporé dans la couche (22) sensible sur la base d'un constituant de l'atmosphère environnante ou sur la base d'un état environnemental.

8. Le transistor (10) à effet de champ à grille suspendue de l'une quelconque des revendications 1 à 5, dans lequel l'interaction du constituant (24-A) de l'analyte (24) est une réaction exothermique du constituant (24-A) de l'analyte (24) avec ou sans une matière catalytique dans la couche (22) sensible.

9. Le transistor (10) à effet de champ à grille suspendue de l'une quelconque des revendications 1 à 5, dans lequel l'interaction du constituant (24-A) de l'analyte (24) est une réaction endothermique du constituant (24-A) de l'analyte (24) avec ou sans une matière catalytique dans la couche (22) sensible.

10. Le transistor (10) à effet de champ à grille suspendue de l'une quelconque des revendications précédentes, dans lequel le matériau de la couche (22) sensible comprend au moins l'un d'un hydrogel, de composites de nanoparticules conducteurs, d'un réseau organométallique, d'un polymère, d'un aptamère, d'un anticorps et d'un ADN/ARN.

11. Le transistor (10) à effet de champ à grille suspendue de l'une quelconque des revendications précédentes, dans lequel la structure (20) de membrane est agencée pour chevaucher au moins une partie de la région (14) de canal ou toute la région (14) de canal.

12. Le transistor (10) à effet de champ à grille suspendue de l'une quelconque des revendications précédentes, comprenant en outre :
des plages (26-1, 26-2, 26-3) de contact sur l'autre couche (30 ; 34) isolante, qui sont connectées à la première région (16-1) de contact, à la deuxième région (16-2) et à la structure (20) de membrane respectivement.

13. Le transistor (10) à effet de champ à grille suspendue de l'une quelconque des revendications précédentes, dans lequel le matériau de la couche (22) sensible est configuré pour interagir chimiquement ou physiquement avec le constituant (24-A) de l'analyte (24).

**14.** Le transistor (10) à effet de champ à grille suspendue de l'une quelconque des revendications précédentes, comprenant en outre :
une couche (18) isolante, qui est disposée sur le substrat (12) à semiconducteur et qui recouvre la région (14) de canal.

**15.** Le transistor (10) à effet de champ à grille suspendue de l'une quelconque des revendications précédentes, dans lequel la région (20-1) de grille déplaçable de la structure (20) de membrane est soi-même conductrice de l'électricité ou a au moins une couche conductrice d'électricité ou a un matériau non conducteur ayant des charges statiques.

**16.** Un capteur (100) chimique, comprenant :
un transistor (10) à effet de champ à grille suspendue suivant l'une quelconque des revendications précédentes, et
une structure (50) de référence pour détecter un paramètre environnemental, dans lequel la structure de référence a la même structure que le transistor à effet de champ à grille suspendue à l'exception de la couche (22) sensible.

**17.** Un agencement de détection comprenant :

une pluralité de transistors (10 ; 10-1, 10-2 ... 10-n) à effet de champ à grille suspendue suivant l'une quelconque des revendications 1 à 15,
dans lequel un premier groupe (10-A) des transistors (10) à effet de champ comprend une couche (22) sensible, qui est sensible à un premier analyte (24), et
dans lequel un deuxième groupe (10-B) des transistors (10) à effet de champ comprend une couche (22) sensible, qui est sensible au premier analyte (24) ou à un deuxième analyte (24).

**18.** L'agencement de détection de la revendication 17, comprenant en outre :
une structure (50) de référence pour la détection d'un paramètre environnemental, dans lequel la structure de référence a la même structure que la pluralité de transistors (10) à effet de champ à grille suspendue à l'exception de la couche (22) sensible.

**19.** L'agencement de détection de la revendication 17 ou 18, dans lequel la pluralité de transistors (10) à effet de champ à grille suspendue sont disposés suivant un réseau de capteur nxm avec $n \geq 2$ et $m \geq 2$.

Fig. 1

Fig. 2

Fig. 3

Fig. 4

EP 4 462 113 B1

Fig. 5

Fig. 6

**EP 4 462 113 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4730479 A